# FASCICULE DE BREVET EUROPEEN

(11) **EP 4 121 708 B1**
(45) Date de publication et mention de la délivrance du brevet: **04.06.2025**
(21) Numéro de dépôt: 21711925.4
(22) Date de dépôt: 18.03.2021
(51) Int. Cl.: F28D 7/16, F02B 29/04, F28F 9/02, F28F 9/18, F28D 21/00

(54) **ECHANGEUR THERMIQUE POUR VÉHICULE AUTOMOBILE**
WÄRMETAUSCHER FÜR EIN KRAFTFAHRZEUG
HEAT EXCHANGER FOR A MOTOR VEHICLE

(30) Priorité: 20.03.2020 FR 2002730
(43) Date de publication de la demande: 25.01.2023
(73) Titulaire: VALEO SYSTEMES THERMIQUES, 78320 Le Mesnil Saint-Denis (FR)
(72) Inventeur: METEZEAU, Frédéric, 78322 Le Mesnil-Saint-Denis Cedex (FR); VILLALONGA, François, 78322 Le Mesnil-Saint-Denis Cedex (FR); LIPOWSKI, Mateusz, 32 050 Skawina (PL); PIETRZAK, Lukasz, 32 050 Skawina (PL)
(74) Mandataire: Valeo Systèmes Thermiques
(86) Numéro de dépôt international: PCT/EP2021/056998
(87) Numéro de publication internationale: WO 2021/185987

(56) Documents cités:
- EP-A2- 1 995 544
- EP-B1- 1 995 544
- FR-A1- 2 968 750
- FR-A1- 3 030 709
- US-A1- 2018 073 469
- US-B2- 6 595 274

## Description

L'invention concerne un échangeur thermique pour véhicule automobile et elle concerne plus particulièrement un échangeur thermique susceptible de refroidir de l'air d'alimentation du moteur du véhicule. Un tel échangeur thermique comportant les caractéristiques du préambule de la revendication 1 est connu de FR 3 030 709.

Un tel échangeur peut comporter un collecteur d'admission et un collecteur de distribution encadrant un faisceau d'échange de chaleur apte à canaliser des fluides et configuré pour permettre un échange de chaleur entre les fluides lorsqu'ils se croisent dans l'échangeur thermique.

Le faisceau d'échange de chaleur comprend des tubes dans lesquels circule un premier fluide traversant l'échangeur thermique, le deuxième fluide étant guidé pour circuler entre les tubes. C'est ainsi au niveau de ces tubes que les gaz sont refroidis, notamment par échange calorifique avec un fluide de refroidissement avantageusement caloporteur. En d'autres termes, le fluide de refroidissement circule au travers du faisceau d'échange de chaleur, entre les tubes, et contribue ainsi au refroidissement des gaz circulant dans les tubes.

Le faisceau d'échange de chaleur présente ainsi un volume interne étanche où circule le fluide de refroidissement. Il est connu de délimiter ce volume interne par trois éléments, à savoir par les collecteurs d'admission et de distribution, par un premier et un dernier tubes s'étendant à des extrémités du faisceau d'échange de chaleur et par une enveloppe entourant les tubes de l'échangeur thermique.

Afin d'éviter toute zone de fuite du fluide de refroidissement, il est particulièrement fait attention aux zones de liaison entre les différents composants délimitant le volume interne du faisceau d'échange de chaleur, de manière à notamment éviter que du liquide de refroidissement puisse fuir de l'échangeur thermique au niveau de ces zones de liaison.

C'est dans ce contexte que s'inscrit l'invention qui a pour objet un échangeur thermique selon la revendication 1.

L'invention concerne ainsi un échangeur thermique qui a pour fonction de refroidir un premier fluide notamment grâce à un deuxième fluide. Lorsque l'échangeur thermique est mis en situation, le collecteur d'admission réceptionne le premier fluide, ce fluide traversant ensuite le faisceau d'échange de chaleur vers le collecteur de distribution. En traversant le faisceau d'échange de chaleur, le premier fluide est refroidi par un deuxième fluide, le premier fluide refroidi arrivant ensuite au niveau du collecteur de distribution.

Le deuxième fluide est guidé en circulation dans le faisceau d'échange de chaleur grâce à l'enveloppe du faisceau d'échange de chaleur. De la sorte, l'échangeur thermique se doit d'être étanche afin d'éviter les fuites du deuxième fluide depuis l'échangeur thermique.

On comprend par contact surfacique un contact qui s'étend au moins dans un plan, ce plan étant ici un plan sensiblement perpendiculaire à la direction longitudinale. L'enveloppe est ainsi en contact avec au moins l'un des collecteurs, et avantageusement les deux collecteurs, dans un plan perpendiculaire à la direction longitudinale. L'extrémité à bord droit de de l'enveloppe permet lors du montage de la plaque collectrice sur le faisceau d'échange de chaleur de pousser à fond la plaque collectrice jusqu'à la butée et ains de bien s'assurer que la plaque collectrice est au plus proche de l'enveloppe avant l'opération de brasage.

Selon une caractéristique optionnelle de l'invention, l'enveloppe est également en contact surfacique plan avec l'au moins une plaque collectrice dans un plan parallèle à la direction longitudinale.

Selon une autre caractéristique optionnelle de l'invention, les tubes sont disposés successivement les uns à côté des autres selon la direction transversale et dans lequel l'enveloppe comporte au moins une paroi transversale qui s'étend selon cette direction transversale en étant au contact de chacun des tubes, le contact surfacique entre plaque collectrice et tube étant formé au niveau de l'extrémité longitudinale de cette paroi transversale.

Selon différentes caractéristiques optionnelles de l'invention, prises seules ou en combinaison, on peut prévoir que :
- chaque excroissance présente une dimension transversale sensiblement égale à la dimension transversale du tube disposé dans la zone de contact correspondante ;
- chaque excroissance présente une dimension verticale C inférieure à la dimension verticale de la paroi transversale ;

On entend par excroissance une prolongation de l'enveloppe depuis une de ses extrémités longitudinales. L'excroissance a pour principale fonction de renforcer la fonction d'étanchéité de l'enveloppe, notamment en se positionnant dans un espace où le deuxième fluide peut fuir. De la sorte, l'excroissance est configurée pour être positionnée au niveau de l'une des zones de contact de l'enveloppe avec le collecteur d'admission et/ou de distribution.

L'excroissance peut être monobloc avec l'enveloppe. On comprend par le terme monobloc que l'excroissance et l'enveloppe ne peuvent être séparés que par destruction de l'un des deux éléments.

L'excroissance prolonge au moins en partie l'une des extrémités longitudinales de l'enveloppe le long de la direction longitudinale, mais l'excroissance peut également s'étendre le long d'une autre direction. Par exemple, l'excroissance peut s'étendre le long d'une direction parallèle à la direction dans laquelle s'aligne la pluralité de tubes.

Selon une caractéristique optionnelle de l'invention, la paroi ajourée est emboutie localement, autour de chacune des ouvertures traversantes, de manière à présenter un bord d'extrémité roulé formant une bordure en saillie de la paroi ajourée et augmenter la surface de contact avec les tubes.

Selon une caractéristique optionnelle de l'invention, l'enveloppe présente une première extrémité longitudinale à bord droit en contact avec la première plaque collectrice au niveau d'une première zone de contact et une deuxième extrémité longitudinale à bord droit en contact avec la deuxième plaque collectrice au niveau d'une deuxième zone de contact.

Chacune des extrémités longitudinales de l'enveloppe est en contact avec soit la plaque collectrice associée au collecteur d'admission, soit la plaque collectrice associée au collecteur de distribution, formant ainsi une première zone de contact au niveau du collecteur d'admission et une deuxième zone de contact au niveau du collecteur de distribution.

Tel que cela a été précisé précédemment, au moins une des zones de contact de l'enveloppe est un contact surfacique dans un plan perpendiculaire à la direction longitudinale. Ainsi, la première zone de contact ou la deuxième zone de contact reproduit un contact surfacique dans un plan perpendiculaire à la direction longitudinale conformément à l'invention.

Avantageusement, chaque zone de contact de l'enveloppe avec le collecteur d'admission et le collecteur de distribution est un contact surfacique dans un plan perpendiculaire à la direction longitudinale.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation en perspective d'un échangeur thermique selon l'invention ;
[Fig. 2] est une vue éclatée des différents composants de l'échangeur thermique de la figure 1 ;
[Fig. 3] est une coupe longitudinale de l'échangeur thermique de la figure 1 ;
[Fig. 4] est un détail d'une coupe longitudinale de l'échangeur thermique de la figure 1, rendant plus particulièrement visibles une enveloppe, une plaque collectrice et un tube de cet échangeur ;
[Fig. 5] est une représentation en perspective d'une extrémité longitudinale d'un tube rendant visible un bord d'extrémité longitudinal de l'enveloppe et une excroissance conforme à un aspect de l'invention.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

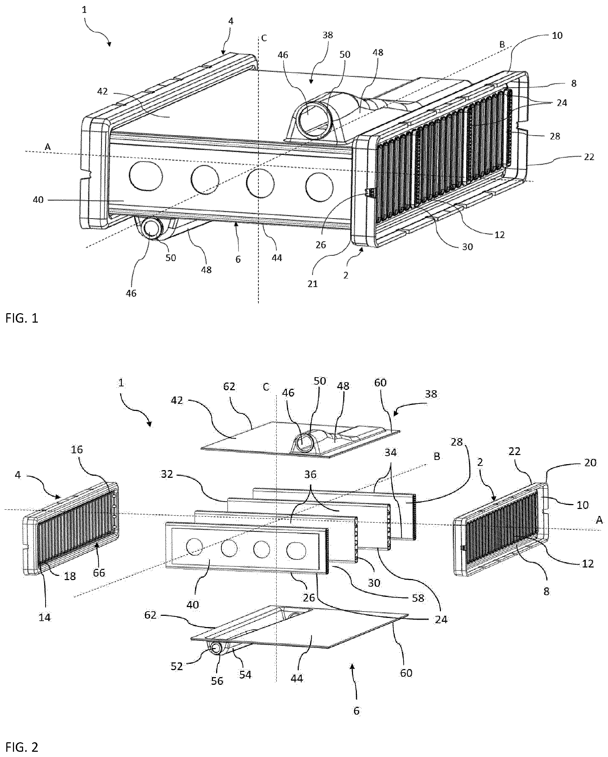

La figure 1 illustre un échangeur thermique 1 selon l'invention, apte à équiper un véhicule automobile et qui peut notamment constituer un radiateur de refroidissement d'un moteur ou un radiateur de chauffage de l'habitacle de ce véhicule.

L'échangeur thermique 1 prend globalement la forme d'un parallélépipède rectangle et comprend au moins un collecteur d'admission ici non représenté et apte à être fixé sur une première plaque collectrice 2, un collecteur de distribution ici non représenté et apte à être fixé sur une deuxième plaque collectrice 4 et un faisceau d'échange de chaleur 6 s'étendant entre le collecteur d'admission et le collecteur de distribution le long d'une direction longitudinale A. Le faisceau 6 est notamment configuré pour permettre un échange de chaleur entre un premier fluide et un second fluide.

Le premier fluide peut par exemple être de l'air de suralimentation destiné à alimenter le moteur du véhicule, et le second fluide peut être un liquide de refroidissement ou de l'air selon que l'échangeur de chaleur soit de type air-eau ou de type air-air.

La première plaque collectrice 2 et la deuxième plaque collectrice 4 représentent chacun une face opposée du parallélépipède rectangle, le faisceau d'échange de chaleur 6 étant disposé entre ces plaques collectrices et formé, tel que cela sera décrit ci-après, par une enveloppe externe et une pluralité de tubes agencés en parallèle les uns des autres à l'intérieur de cette enveloppe. Le faisceau d'échange de chaleur est tel que le premier fluide est amené à circuler à l'intérieur de chacun des tubes et le second fluide est amené à circuler entre les tubes, l'échange de chaleur se faisant d'un fluide à l'autre au niveau des tubes.

En référence notamment aux figures 1 et 2, la première plaque collectrice 2 et la deuxième plaque collectrice 4 sont symétriques l'une de l'autre par rapport au faisceau d'échange de chaleur 6 et à la direction longitudinale A. De la sorte, une caractéristique décrite pour une plaque collectrice sera également applicable pour l'autre plaque collectrice, que celle-ci soit destinée à être solidaire au collecteur d'admission ou au collecteur de distribution. De plus, le terme général « plaque collectrice 2, 4 » fera indifféremment référence à la première plaque collectrice 2 et à la deuxième plaque collectrice 4 dans la suite de la description.

La plaque collectrice 2, 4 s'étend principalement dans un plan perpendiculaire à la direction longitudinale A, une dimension principale de la plaque collectrice 2, 4 étant mesurée le long d'une direction transversale B perpendiculaire à la direction longitudinale A.

La plaque collectrice 2, 4 comprend une paroi ajourée 8 délimitée périphériquement par un cadre 10. Plus particulièrement, la plaque collectrice comporte une pluralité de barreaux agencés parallèlement les uns aux autres, perpendiculairement à la direction transversale B, en s'étendant entre deux bords opposés du cadre de manière à définir une pluralité d'ouvertures traversantes 12 à travers lesquelles un fluide, et notamment de l'air de suralimentation destiné à alimenter le moteur du véhicule, peut circuler. Ces ouvertures traversantes 12 sont ici représentées sous une forme allongée, comme un rectangle par exemple, dont la dimension la plus grande se mesure le long d'une direction verticale C perpendiculaire aux directions longitudinale A et transversale B. Chaque ouverture traversante 12 est dimensionnée pour recevoir l'extrémité d'un des tubes formant partie du faisceau d'échange de chaleur 6 tel qu'ils seront décrits ci-après. On comprend ainsi que le fluide amené à traverser le collecteur et les ouvertures traversantes 12 correspondantes provient des tubes ou est dirigé à l'intérieur des tubes, selon que le collecteur soit un collecteur d'entrée ou de sortie.

Le cadre 10 forme un prolongement de la périphérie de la paroi ajourée 8 le long de la direction longitudinale A, sur tout le pourtour de cette paroi ajourée 8. Plus particulièrement, le cadre 10 comporte une première portion 21 qui prolonge directement la paroi ajourée et qui s'étend en direction de l'intérieur de l'échangeur thermique, c'est-à-dire en direction du faisceau d'échange de chaleur 6, en formant une cuvette entourant la paroi ajourée, et il comporte également une deuxième portion 22 qui prolonge directement la première portion 21 et qui s'étend longitudinalement à l'opposé du faisceau d'échange de chaleur en présentant un bord d'extrémité libre. Le bord d'extrémité libre de la deuxième portion 22 est configuré pour coopérer avec le circuit d'alimentation précité et/ou le moteur alors que la première portion 21 est configuré pour être en contact avec le faisceau d'échange de chaleur 6.

Tel qu'illustré plus particulièrement sur la figure 2, le faisceau d'échange de chaleur 6 de l'échangeur thermique 1 comprend au moins une pluralité de tubes 24 et une enveloppe 38.

Les tubes 24 sont agencés parallèlement les uns aux autres, chacun des tubes 24 s'étendant longitudinalement entre le collecteur d'admission et la première plaque collectrice 2 et le collecteur de distribution et la deuxième plaque collectrice 4 à travers le faisceau d'échange de chaleur 6. Les tubes sont agencés successivement les uns après les autres de sorte que l'on peut distinguer un premier tube 26, disposé à une extrémité transversale de cette pluralité de tubes, et un dernier tube 28, disposé à l'extrémité transversale opposée de cette pluralité de tubes.

Chaque tube 24 s'étend longitudinalement entre une première extrémité 30 et une deuxième extrémité 32 et est disposé dans le faisceau d'échange de chaleur 6 de sorte que la première extrémité 30 soit en contact de la première plaque collectrice 2 et la deuxième extrémité 32 en contact de la deuxième plaque collectrice 4. Chaque extrémité 30, 32 de ces tubes 24 dépasse de l'ouverture traversante 12 correspondante de sorte que les tubes 24 débouchent ainsi dans le collecteur d'admission ou de distribution et permette le passage de fluide entre ces collecteurs et le faisceau d'échange de chaleur. Trois premières extrémités 30 sont visibles sur la figure 1, les autres tubes n'ayant pas été représentés pour rendre visible la position des tubes à travers la plaque collectrice.

Chaque tube 24 s'étend le long de la direction longitudinale A, entre la une ouverture traversante 12 de la première plaque collectrice 2 et une ouverture traversante correspondante de la deuxième plaque collectrice du collecteur de distribution 4.

Pour faciliter la lecture des figures, seuls quatre tubes de la pluralité de tubes 24 sont représentés ici sur la figure 2, dont le premier tube 26 et le dernier tube 28. Cependant, la pluralité de tubes 24 comprend généralement autant de tubes 24 que le nombre d'ouvertures traversantes 12 des plaques collectrices 2, 4, chaque tube 24 reliant une ouverture traversante 12 de la première plaque collectrice 2 à l'ouverture traversante 12 correspondante de la deuxième plaque collectrice 4.

Chaque tube 24 présente une forme similaire à celle des autres tubes 24, à savoir ici la forme d'un tube plat, une section de chaque tube 24 correspondant à la section d'une ouverture traversante 12 des plaques collectrices 2, 4. Plus précisément, la section de chaque tube 24 présente une forme globalement rectangulaire, dont la dimension la plus grande se mesure le long de la direction verticale C. De la sorte, chaque tube 24 comporte deux faces d'extrémité 34 opposées ici verticalement l'une par à rapport à l'autre et deux faces principales 36 reliant les faces d'extrémité 34.

L'enveloppe 38 est destinée à entourer la pluralité de tubes 24 et à rendre étanche la zone définissant le faisceau d'échange de chaleur 6. Plus particulièrement, l'enveloppe 38 comprend deux parois latérales 40, dont une seule des deux parois latérales 40 est visible sur la figure 2, et deux parois transversales 42, 44 qui s'étendent chacune longitudinalement entre le collecteur d'admission et la première plaque collectrice 2 d'une part et le collecteur de distribution et la deuxième plaque collectrice 4 d'autre part.

Chacune des parois latérales 40 s'étend dans un plan parallèle aux directions longitudinale A et verticale C, une de ces parois latérales 40 étant disposée sur une face principale externe du dernier tube 28 de la pluralité de tubes 24, tandis que l'autre paroi latérale est disposée sur une face principale externe du premier tube 26 de la pluralité de tubes 24. On comprend que la face principale externe du premier tube et la face principale externe du dernier tube sont tournées à l'opposé l'une de l'autre, vers l'extérieur du faisceau d'échange de chaleur 6, de telle sorte que les parois latérales 40 de l'enveloppe 38 encadrent transversalement la pluralité de tubes 24.

Les parois transversales 42, 44 s'étendent chacune dans un plan parallèle aux directions longitudinale A et transversale B. Ces parois transversales 42, 44 s'étendent entre les plaques collectrices 2, 4 le long de la direction longitudinale A et entre les parois latérales 40 le long de la direction transversale B. Les parois transversales 42, 44 encadrent verticalement la pluralité de tubes 24.

Chaque paroi transversale 42, 44 comprend une portion plane destinée à être plaquée contre les faces d'extrémité 34 des tubes et un embouti 48 formant une coulée de circulation de fluide qui s'étend principalement de façon perpendiculaire à la direction d'allongement des tubes, à savoir ici la direction longitudinale. Cet embouti forme une partie bombée vers l'extérieur du faisceau d'échange de chaleur 6 et il présente une entrée ou sortie de fluide 46 équipée d'un orifice circulaire 50 par lequel le fluide entre dans ou sort de la coulée de circulation de fluide. L'embouti 48 s'étend sur toute la dimension de la paroi transversale 42, 44 correspondante le long de la direction transversale B, la coulée de circulation de fluide 48 permettant de répartir le fluide pénétrant dans le faisceau d'échange de chaleur entre chacun des tubes ou bien de récupérer l'ensemble du fluide circulant entre chacun des tubes selon que la paroi transversale et sa coulée de circulation soit associée à une entrée ou une sortie de fluide.

La disposition des parois latérales 40 et transversales 42, 44 de l'enveloppe 38 délimite un volume interne du faisceau d'échange de chaleur 6 dans lequel s'étend la pluralité de tubes 24 et à l'intérieur duquel circulent le premier fluide, à l'intérieur des tubes, et le deuxième fluide, entre les tubes.

Les parois transversales 42,44 de l'enveloppe 38 présentent une première extrémité longitudinale 60 susceptible d'être en contact avec la première portion 21 de la première plaque collectrice 2 et une deuxième extrémité longitudinale 62 susceptible d'être en contact avec la première portion 21 de la deuxième plaque collectrice 4.

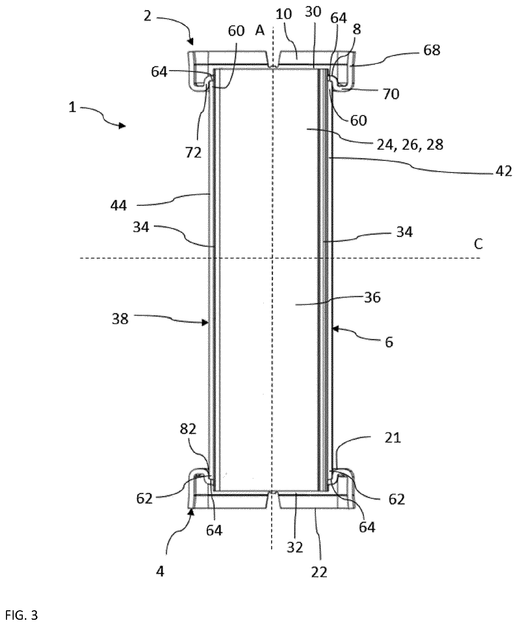

Tel que cela est notamment visible sur la figure 3, ce contact entre les extrémités longitudinales 60, 62 des parois transversales 42, 44 de l'enveloppe 38 et les premières portions 21 des plaques collectrices 2, 4 permet de former des zones de contact 64 qui rendent étanches la jonction du faisceau d'échange de chaleur 6 et des collecteurs via les plaques collectrices 2, 4 et qui permettent ainsi de rendre étanche la circulation du deuxième fluide entre les tubes.

Pour assurer l'étanchéité du volume interne du faisceau d'échange de chaleur 6, chaque plaque collectrice 2, 4 comprend au niveau de sa première portion 21 un logement 82 de forme complémentaire à celle d'une extrémité longitudinale 60, 62 des parois transversales 42, 44 de l'enveloppe 38.

Chaque zone de contact 64 entre une des extrémités longitudinales 60, 62 de l'enveloppe 38 et une des premières portions 21 des plaques collectrices 2, 4, **au** niveau d'un logement 82, est similaire, c'est-à-dire que le contact se réalise de façon identique. Ainsi, une caractéristique décrite pour l'une de ces zones de contact 64 est applicable aux autres zones de contact 64. De plus, on utilisera le terme « extrémité longitudinale 60, 62 » pour faire référence indifféremment aux première et deuxième extrémités longitudinales 60, 62 de chaque paroi transversale 42, 44 de l'enveloppe 38 du faisceau d'échange de chaleur 6 dans la suite de la description.

On va maintenant décrire plus particulièrement une zone de contact 64 entre le logement 82 défini dans la première portion 21 d'une plaque collectrice 2, 4 et une extrémité longitudinale 60, 62 de l'enveloppe 38 du faisceau d'échange de chaleur 6.

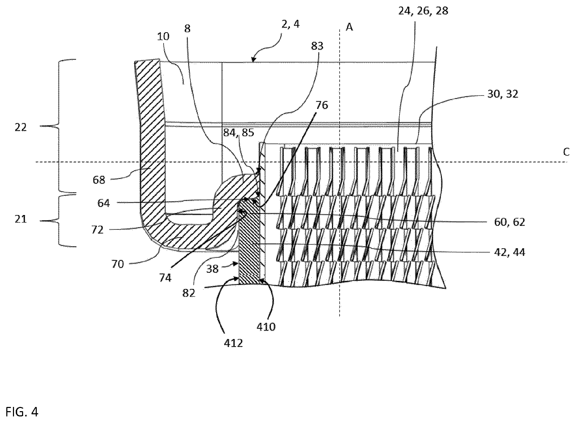

En référence à la figure 4, la première portion 21 est formée successivement d'une paroi externe 68, qui s'étend dans le prolongement longitudinal de la deuxième portion 22, d'une paroi de fond 70, qui forme le fond de la cavité précédemment évoquée en prolongeant sensiblement perpendiculairement la paroi externe 68 en direction de l'intérieur de la plaque collectrice 2, 4, à savoir vers la paroi ajourée 8, et enfin d'une paroi de repli 72, qui prolonge perpendiculairement la paroi de fond 70, en regard de la paroi externe 68 et jusqu'à la paroi ajourée 8.

Tel qu'illustré sur la figure **4****,** la paroi ajourée 8 est emboutie localement, autour de chacune des ouvertures traversantes 12, de manière à présenter un bord d'extrémité roulé vers l'intérieur de la plaque collectrice correspondante, c'est-à-dire en direction de la deuxième portion 22. En d'autres termes, la paroi ajourée comporte sur le pourtour de chaque ouverture traversante une bordure 83 qui forme une saillie de la paroi ajourée et qui assure un allongement de la surface de contact avec les tubes à l'intérieur de la plaque collectrice correspondante. Il en résulte un dégagement 85 correspondant sur la face opposée de la paroi ajourée, c'est-à-dire une face interne 76 de la paroi ajourée tournée vers le faisceau d'échange de chaleur, ce dégagement 85 permettant notamment de faciliter l'insertion du tube dans l'ouverture traversante correspondante.

Le logement 82, dimensionné pour recevoir l'extrémité longitudinale 60, 62 correspondante, est formé entre les faces d'extrémité 34 des tubes 24, la face interne 74 de la paroi de repli 72 et la face interne 76 de la paroi ajourée 8, lesdites faces internes étant tournées vers le faisceau d'échange de chaleur.

La paroi transversale 42, 44 destinée à se positionner dans le logement 82 est configurée selon l'invention pour être en contact avec la plaque collectrice 2, 4 correspondante, dans un contact surfacique plan réalisé dans un plan perpendiculaire à la direction longitudinale A. A cet effet, la paroi transversale présente un bord droit à chaque extrémité longitudinale 60, 62, c'est-à-dire un bord perpendiculaire au plan d'allongement principal, ici longitudinal et transversal, de la paroi transversale. Tel que cela sera décrit ci-après, un plan incliné formant rampe peut être localement prévu sur ce bord droit, mais il convient de noter que la majeure partie de l'extrémité longitudinale présente la forme de ce bord droit, c'est-à-dire s'étendant dans un plan perpendiculaire au plan d'allongement principal de la paroi transversale.

Plus précisément, l'extrémité longitudinale 60, 62 d'une des parois transversales 42, 44 de l'enveloppe 38, une fois positionnée dans le logement 82, est en contact au moins avec la face interne 76 de la paroi ajourée 8, ce contact se réalisant au moins dans un plan parallèle aux directions transversale B et verticale C. L'extrémité longitudinale 60, 62 et la paroi ajourée 8 définissent ainsi une zone de contact 64, cette dernière s'étendant en continu le long de la direction transversale B entre le premier tube 26 et le dernier tube 28. Cette zone de contact 64 contribue à rendre étanche le volume interne du faisceau d'échange de chaleur 6, au moins au niveau des parois transversales 42, 44 de l'enveloppe 38 et des plaques collectrices 2, 4 propres à l'admission et la distribution de fluide.

L'étanchéité est notamment assurée par une opération de brasage réalisée dans un four approprié, qui tend à assurer le contact entre le bord droit des extrémités longitudinales des parois transversales et la face interne 76 de la paroi ajourée 8.

L'opération de brasage permet également de rendre solidaires les parois transversales 42, 44 de l'enveloppe 38 avec les faces d'extrémité 34 d'au moins le premier et le dernier tube 26, 28 de la pluralité de tubes 24, le contact s'étendant sensiblement le long de la direction longitudinale A entre chacune des extrémités longitudinales 60, 62 des parois transversales 42, 44, de manière là encore à assurer l'étanchéité du volume interne du faisceau d'échange de chaleur 6.

Selon un mode de réalisation alternatif, les faces d'extrémité 34 d'autres tubes 24 de la pluralité de tubes 24 peuvent également être en contact avec les parois transversales 42, 44 de l'enveloppe 38, ces contacts participant à délimiter des espaces partiellement clos du volume interne du faisceau d'échange de chaleur 6.

Par ailleurs, l'opération de brasage peut également permettre de rendre solidaires l'extrémité longitudinale 60,62 de la paroi transversale 42, 44 avec la paroi de repli 72 de la plaque collectrice 2, 4, le contact se réalisant au moins dans un plan parallèle aux directions longitudinale A et transversale B.

Selon l'invention, les formes et les dimensions du logement 82 d'une part et de l'extrémité longitudinale 60, 62 de la paroi transversale 42, 44 d'autre part permettent d'insérer la paroi transversale dans le logement jusqu'à ce que le contact surfacique entre extrémité longitudinale et paroi ajourée soit effectif et forme une butée au déplacement. On s'assure ainsi que la paroi transversale soit correctement insérée avant l'opération de brasage, c'est à dire que la paroi transversale soit suffisamment proche de la paroi ajourée pour que l'opération de brasage soit efficace et permettre d'assurer l'étanchéité de la surface d'échange de chaleur.

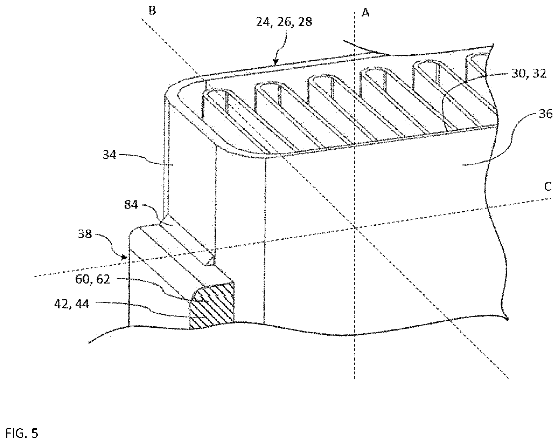

Selon l'invention, et tel que cela est visible sur les figures 4 et 5, l'enveloppe 38 comprend au moins une excroissance 84 qui prolongea localement l'enveloppe 38 le long de la direction longitudinale A. Plus précisément, chaque excroissance 84 prolonge localement une extrémité longitudinale 60,62 d'une paroi transversale 40, 42 de l'enveloppe 38, étant entendu que cette extrémité longitudinale conserve une forme majoritairement plane et perpendiculaire au plan d'allongement principale de la paroi transversale.

L'au moins une excroissance 84 est réalisée en saillie de l'extrémité longitudinale 60, 62 et est configurée pour venir combler le dégagement 85 présent entre la paroi ajourée 8 et le tube 24 correspondant. Tel que cela a été précisé précédemment, la bordure de la paroi ajourée 8 participant à délimiter une ouverture traversante 12 est pliée de sorte qu'un rayon d'emboutissage participe à délimiter un dégagement 85 formant, entre le tube et l'extrémité longitudinale de l'enveloppe, un espace de fuite. De ce fait, l'excroissance 84 de l'extrémité longitudinale 60, 62 se loge dans cet espace de fuite en présentant une complémentarité structurelle avec chacun des composants délimitant cet espace.

On définit une surface interne 410 de la paroi transversale comme la surface étant opposée aux tubes sur lesquels la portion plane de la paroi transversale vient reposer, et une surface externe 412 de la paroi transversale comme la surface opposée. Selon l'invention, et tel qu'illustré sur la figure 5, l'extrémité longitudinale 60, 62 de la paroi transversale présente majoritairement un bord droit et l'excroissance 84, qui prolonge en partie l'extrémité longitudinale 60, 62 de l'enveloppe 38 le long de la direction longitudinale A, s'étend localement dans le prolongement de la surface interne 410, c'est-à-dire au plus proche du volume interne du faisceau d'échange de chaleur 6 de sorte à pouvoir être en contact avec le tube 24. En d'autres termes, l'épaisseur, ou dimension selon la direction verticale C, de l'excroissance 84 est inférieure à l'épaisseur, ou dimension correspondante selon la même direction verticale, de la paroi transversale. Tel qu'illustré, l'excroissance 84 peut notamment présenter une épaisseur dont la valeur est sensiblement égale à 10 à 20% de la valeur de l'épaisseur de la paroi transversale.

Chaque excroissance 84 prévue en prolongement de la paroi transversale de l'enveloppe s'étend le long de la direction transversale B sur une distance sensiblement égale à la dimension transversale du tube 24 au contact duquel cette excroissance est prévue d'être.

Tel qu'illustré sur la figure 5, l'excroissance 84 est agencée sur l'enveloppe de manière à être au contact du premier tube 26 ou du dernier tube 28 de la pluralité de tubes 24, au moins deux excroissances 84 étant prévues, à l'opposé l'une de l'autre selon la direction transversale B, sur une même extrémité longitudinale pour coopérer respectivement avec le premier tube 26 et le dernier tube 28. Ainsi, le premier tube 26, le dernier tube 28, les excroissances 84, les plaques collectrices 2, 4 et les parois transversales 42, 44 de l'enveloppe 38 délimitent un espace étanche de circulation d'un fluide, notamment après une opération de brasage rendue possible par la proximité de matière de chacun des composants cités ci-dessus avant de passer dans le four de brasage. En effet, chacun des éléments précités participe à guider la circulation d'un fluide entre les tubes 24 depuis la première paroi transversale 42 de l'enveloppe 38 vers la deuxième paroi transversale 44 de l'enveloppe 38.

Selon un mode de réalisation alternatif, l'enveloppe 38 peut comprendre une excroissance 84 au niveau de chaque zone de contact 64 proche d'un tube 24, en plus de celles prévues pour être au contact des premier et dernier tubes 26, 28. De cette façon, les excroissances 84 délimitent différents espaces de circulation étanches dans le volume interne du faisceau d'échange de chaleur 6, le nombre d'espaces de circulation étanches étant ainsi corrélé au nombre d'excroissances 84 de l'enveloppe 38.

L'excroissance 84 est réalisée d'un seul tenant avec la paroi transversale 40, 42 correspondante, de manière à former avantageusement un ensemble monobloc avec l'enveloppe 38. Cette caractéristique facilite la fabrication et le montage de l'échangeur thermique 1, mais il convient de noter qu'une excroissance 84 formant une entité réalisée distinctement de l'enveloppe 38 et rapportée sur celle-ci ne sortirait pas du cadre de l'invention.

L'excroissance 84 est constituée d'un matériau similaire à l'enveloppe 38 et aux plaques collectrices 2, 4. En effet, tel qu'évoqué précédemment, lors du montage de l'échangeur thermique 1, la paroi ajourée 8 au niveau de la zone de contact 64 et l'extrémité longitudinale 60, 62 sont rendues au moins partiellement solidaires l'une de l'autre par brasage et il convient que le matériau d'apport nécessaire à l'opération de brasage soit chimiquement solidaire de l'excroissance 84, de l'extrémité longitudinale 60, 62 et de la plaque collectrice.

Pour faciliter la compréhension de l'invention, on va maintenant décrire le fonctionnement de l'échangeur thermique 1, et notamment de la circulation des différents fluides le traversant.

Pour rappel, l'échangeur thermique 1 a pour fonction de refroidir des gaz circulant au travers de lui-même.

Le collecteur d'admission réceptionne les gaz provenant du circuit d'alimentation du moteur et les guide ensuite, via la première plaque collectrice 2, vers le faisceau d'échange de chaleur 6 à travers la pluralité de tubes 24 où ils sont refroidis, augmentant leur concentration en oxygène. Les gaz refroidis sont ensuite guidés vers le collecteur de distribution 4 et vers le moteur.

Les gaz sont refroidis dans la pluralité de tubes 24 par un échange de chaleur avec un autre fluide, à travers la paroi de chaque tube 24 de la pluralité de tubes 24. Le second fluide circule entre la pluralité de tubes 24 dans la volume interne du faisceau d'échange de chaleur 6 depuis l'orifice circulaire 50 de la première paroi transversale 42 vers l'orifice circulaire 50 de la deuxième paroi transversale 44.

Le second fluide peut par exemple être un fluide caloporteur, refroidissant les gaz circulant dans la pluralité de tubes 24.

Tel qu'évoqué précédemment, la zone de contact 64 entre l'extrémité longitudinale 60, 62, l'excroissance 84 et la paroi ajourée 8 et son dégagement 85, ainsi que le contact entre les parois transversales 42, 44 et les premier et dernier tubes 26, 28 contribuent à rendre le faisceau d'échange de chaleur 6 étanche de sorte à limiter la possibilité de fuite de l'autre fluide circulant dans le volume interne du faisceau d'échange de chaleur 6.

L'invention ne saurait toutefois se limiter aux moyens et configurations décrits et illustrés ici, elle est définie par les revendications jointes. En particulier, le volume interne du faisceau d'échange de chaleur peut être parcouru par au moins deux fluides, les parois transversales comprenant alors deux entrées de fluide, deux paliers de distribution, deux paliers de réception et deux sorties de fluide, une excroissance étant positionnée au niveau de chaque zone de contact proche du tube de la pluralité de tubes délimitant les deux espaces de circulation des fluides.

## Revendications

1. Échangeur thermique (1) comprenant une première plaque collectrice (2) d'un collecteur d'admission, une deuxième plaque collectrice (4) d'un collecteur de distribution et un faisceau d'échange de chaleur (6) s'étendant entre la première plaque collectrice(2) et la deuxième plaque collectrice (4) le long d'une direction longitudinale (A), le faisceau d'échange de chaleur (6) étant délimité par une enveloppe (38) et comprenant une pluralité de tubes (24) disposés successivement les uns à côté des autres selon une direction transversale (B), chaque tube (24) étant apte à coopérer avec les plaques collectrices (2, 4) via des orifices traversants (12) ménagés dans chaque plaque, **caractérisé en ce que** l'enveloppe (38) présente au moins une extrémité longitudinale (60, 62) à bord droit configurée pour être en contact surfacique plan avec au moins une plaque collectrice (2, 4) dans une zone de contact (64), le contact surfacique étant réalisé principalement dans un plan perpendiculaire à la direction longitudinale (A),
dans lequel la plaque collectrice (2, 4) comporte une paroi ajourée (8) dans laquelle sont réalisés les orifices traversants (12) et un cadre (10) agencé en périphérie de la paroi ajourée et configuré pour coopérer avec l'enveloppe (38), et dans lequel l'au moins une extrémité longitudinale (60, 62) à bord droit de l'enveloppe (38) comprend au moins une excroissance (84) qui prolonge l'enveloppe (38) le long de la direction longitudinale (A)
dans lequel la pluralité de tubes du faisceau d'échange de chaleur (6) comprend au moins un premier tube (26) et un dernier tube (28) disposés respectivement à chaque extrémité transversale de la pluralité de tubes, **caractérisé en ce que** l'enveloppe (38) comprend au moins une première excroissance (84) en contact avec le premier tube (26) et une deuxième excroissance (84) en contact avec le dernier tube (28) et **en ce que** la paroi ajourée (8) présente au voisinage de chaque orifice traversant un dégagement (85) formé par un bord arrondi ou un chanfrein, chaque excroissance (84) présentant une forme et des dimensions complémentaires à celles du dégagement (85).

2. Échangeur thermique (1) selon la revendication 1, dans lequel l'enveloppe (38) est également en contact surfacique plan avec l'au moins une plaque collectrice dans un plan parallèle à la direction longitudinale (A).

3. Échangeur thermique (1) selon l'une des revendications précédentes, dans lequel les tubes sont disposés successivement les uns à côté des autres selon la direction transversale (B) et dans lequel l'enveloppe comporte au moins une paroi transversale (42, 44) qui s'étend selon cette direction transversale en étant au contact de chacun des tubes (24), le contact surfacique entre plaque collectrice et tube étant formé au niveau de l'extrémité longitudinale de cette paroi transversale.

4. Échangeur thermique (1) selon la revendication 2 ou 3, dans lequel chaque excroissance (84) présente une dimension transversale sensiblement égale à la dimension transversale du tube disposé dans la zone de contact correspondante.

5. Échangeur thermique (1) selon la revendication 2, 3 ou 4, dans lequel chaque excroissance (84) présente une dimension verticale C inférieure à la dimension verticale de la paroi transversale (42, 44).

6. Échangeur thermique (1) selon l'une des revendications 1 à 5, dans lequel la paroi ajourée (8) est emboutie localement, autour de chacune des ouvertures traversantes (12), de manière à présenter un bord d'extrémité roulé formant une bordure (83) en saillie de la paroi ajourée et augmenter la surface de contact avec les tubes (24).

7. Échangeur thermique (1) selon l'une des revendications précédentes, dans lequel l'enveloppe (38) présente une première extrémité longitudinale (60) à bord droit en contact avec la première plaque collectrice (2) au niveau d'une première zone de contact (64) et une deuxième extrémité longitudinale (62) à bord droit en contact avec la deuxième plaque collectrice (4) au niveau d'une deuxième zone de contact (64).

## Patentansprüche

1. Wärmeaustauscher (1), beinhaltend eine erste Sammelplatte (2) eines Einlassendbodens, eine zweite Sammelplatte (4) eines Verteilerendbodens und ein Wärmeaustauschbündel (6), das sich zwischen der ersten Sammelplatte (2) und der zweiten Sammelplatte (4) entlang einer Längsrichtung (A) erstreckt, wobei das Wärmeaustauschbündel (6) durch ein Gehäuse (38) begrenzt wird und eine Vielzahl von Rohren (24) beinhaltet, die aufeinanderfolgend nebeneinander entlang einer Querrichtung (B) angeordnet sind, wobei jedes Rohr (24) dazu fähig ist, über Durchgangsöffnungen (12), die in jeder Platte eingerichtet sind, mit den Sammelplatten (2, 4) zusammenzuwirken, **dadurch gekennzeichnet, dass** das Gehäuse (38) mindestens ein Längsende (60, 62) mit gerader Kante aufweist, das dazu konfiguriert ist, in einem Kontaktbereich (64) mit mindestens einer Sammelplatte (2, 4) in ebenem Flächenkontakt zu stehen, wobei der Flächenkontakt hauptsächlich in einer zu der Längsrichtung (A) senkrechten Ebene hergestellt ist,
wobei die Sammelplatte (2, 4) eine durchbrochene Wand (8), in der die Durchgangsöffnungen (12) hergestellt sind, und einen Rahmen (10), der am Umfang der durchbrochenen Wand eingerichtet ist und dazu konfiguriert ist, mit dem Gehäuse (38) zusammenzuwirken, umfasst,
und wobei das mindestens eine Längsende (60, 62) mit gerader Kante des Gehäuses (38) mindestens einen Vorsprung (84) beinhaltet, der das Gehäuse (38) entlang der Längsrichtung (A) verlängert,
wobei die Vielzahl von Rohren des Wärmeaustauschbündels (6) mindestens ein erstes Rohr (26) und ein letztes Rohr (28) beinhaltet, die jeweils an jedem Querende der Vielzahl von Rohren angeordnet sind, **dadurch gekennzeichnet, dass** das Gehäuse (38) mindestens einen ersten Vorsprung (84) in Kontakt mit dem ersten Rohr (26) und einen zweiten Vorsprung (84) in Kontakt mit dem letzten Rohr (28) beinhaltet und dass die durchbrochene Wand (8) im Bereich jeder Durchgangsöffnung eine Aussparung (85) aufweist, die durch eine gerundete Kante oder eine Abschrägung gebildet wird, wobei jeder Vorsprung (84) eine Form und Abmessungen aufweist, die zu denjenigen der Aussparung (85) komplementär sind.

2. Wärmeaustauscher (1) nach Anspruch 1, wobei das Gehäuse (38) auch in einer zu der Längsrichtung (A) parallelen Ebene mit der mindestens einen Sammelplatte in ebenem Flächenkontakt steht.

3. Wärmeaustauscher (1) nach einem der vorhergehenden Ansprüche, wobei die Rohre aufeinanderfolgend nebeneinander entlang der Querrichtung (B) angeordnet sind und wobei das Gehäuse mindestens eine Querwand (42, 44) umfasst, die sich entlang dieser Querrichtung erstreckt und dabei mit jedem der Rohre (24) in Kontakt steht, wobei der Flächenkontakt zwischen Sammelplatte und Rohr an dem Längsende dieser Querwand gebildet ist.

4. Wärmeaustauscher (1) nach Anspruch 2 oder 3, wobei jeder Vorsprung (84) eine Querabmessung aufweist, die im Wesentlichen gleich der Querabmessung des in dem entsprechenden Kontaktbereich angeordneten Rohrs ist.

5. Wärmeaustauscher (1) nach Anspruch 2, 3 oder 4, wobei jeder Vorsprung (84) eine vertikale Abmessung C aufweist, die kleiner als die vertikale Abmessung der Querwand (42, 44) ist.

6. Wärmeaustauscher (1) nach einem der Ansprüche 1 bis 5, wobei die durchbrochene Wand (8) lokal um jede der Durchgangsöffnungen (12) herum tiefgezogen ist, um eine profilierte Endkante, die eine von der durchbrochenen Wand vorstehende Umrandung (83) bildet, aufzuweisen und die Kontaktfläche zu den Rohren (24) zu vergrößern.

7. Wärmeaustauscher (1) nach einem der vorhergehenden Ansprüche, wobei das Gehäuse (38) in einem ersten Kontaktbereich (64) ein erstes Längsende (60) mit gerader Kante in Kontakt mit der ersten Sammelplatte (2) und in einem zweiten Kontaktbereich (64) ein zweites Längsende (62) mit gerader Kante in Kontakt mit der zweiten Sammelplatte (4) aufweist.

## Claims

1. Heat exchanger (1) comprising a first header plate (2) of an intake manifold, a second header plate (4) of a distribution manifold and a heat-exchange core (6) extending between the first header plate (2) and the second header plate (4) along a longitudinal direction (A), the heat-exchange core (6) being delimited by a shell (38) and comprising a plurality of tubes (24) that are disposed successively next to one another in a transverse direction (B), each tube (24) being able to cooperate with the header plates (2, 4) via through-orifices (12) that are produced in each plate, **characterized in that** the shell (38) has at least one longitudinal end (60, 62) with a straight edge configured to be in planar surface contact with at least one header plate (2, 4) in a contact zone (64), the surface contact being realized mainly in a plane perpendicular to the longitudinal direction (A),
wherein the header plate (2, 4) has a perforated wall (8), in which the through-orifices (12) are produced, and a frame (10) arranged at the periphery of the perforated wall and configured to cooperate with the shell (38),
and wherein the at least one longitudinal end (60, 62) with a straight edge of the shell (38) comprises at least one protuberance (84) which extends the shell (38) along the longitudinal direction (A),
wherein the plurality of tubes of the heat-exchange core (6) comprises at least one first tube (26) and a last tube (28) that are disposed respectively at each transverse end of the plurality of tubes, **characterized in that** the shell (38) comprises at least one first protuberance (84) in contact with the first tube (26) and a second protuberance (84) in contact with the last tube (28), and **in that** the perforated wall (8) has, in the vicinity of each through-orifice, a clearance (85) formed by a rounded edge or a chamfer, each protuberance (84) having a shape and dimensions complementary to those of the clearance (85).

2. Heat exchanger (1) according to Claim 1, wherein the shell (38) is also in planar surface contact with the at least one header plate in a plane parallel to the longitudinal direction (A).

3. Heat exchanger (1) according to either of the preceding claims, wherein the tubes are disposed successively next to one another in the transverse direction (B) and wherein the shell has at least one transverse wall (42, 44) which extends in this transverse direction while being in contact with each of the tubes (24), the surface contact between header plate and tube being formed at the longitudinal end of this transverse wall.

4. Heat exchanger (1) according to Claim 2 or 3, wherein each protuberance (84) has a transverse dimension substantially equal to the transverse dimension of the tube disposed in the corresponding contact zone.

5. Heat exchanger (1) according to Claim 2, 3 or 4, wherein each protuberance (84) has a vertical dimension C smaller than the vertical dimension of the transverse wall (42, 44).

6. Heat exchanger (1) according to one of Claims 1 to 5, wherein the perforated wall (8) is pressed locally, around each of the through-openings (12), so as to have a rolled end edge forming a border (83) protruding from the perforated wall and to increase the contact surface with the tubes (24).

7. Heat exchanger (1) according to one of the preceding claims, wherein the shell (38) has a first longitudinal end (60) with a straight edge in contact with the first header plate (2) at a first contact zone (64) and a second longitudinal end (62) with a straight edge in contact with the second header plate (4) at a second contact zone (64).
